# EUROPÄISCHE PATENTSCHRIFT

(11) **EP 0 968 109 B1**
(45) Veröffentlichungstag und Bekanntmachung des Hinweises auf die Patenterteilung: **25.08.2004**
(21) Anmeldenummer: 98964348.1
(22) Anmeldetag: 05.11.1998
(51) Int. Cl.: B60S 1/34

(54) **SCHEIBENWISCHERARM**
WINDSCREEN WIPER ARM
BRAS DE MONTURE D'ESSUIE-GLACE

(30) Priorität: 20.01.1998 DE 19801944; 29.04.1998 DE 19819053
(43) Veröffentlichungstag der Anmeldung: 05.01.2000
(73) Patentinhaber: ROBERT BOSCH GMBH, 70442 Stuttgart (DE)
(72) Erfinder: METZ, Ulrich, D-77880 Sasbach (DE)
(86) Internationale Anmeldenummer: PCT/DE1998/003220
(87) Internationale Veröffentlichungsnummer: WO 1999/037513

(56) Entgegenhaltungen:
- FR-A- 2 124 714
- GB-A- 636 637
- GB-A- 958 555
- US-A- 4 050 832
- US-A- 4 545 088

## Beschreibung

### Stand der Technik

Die Erfindung betrifft einen Scheibenwischerarm für Scheibenwischer nach der Gattung des Hauptanspruchs. Herkömmliche Scheibenwischerarme bestehen im wesentlichen aus einem Befestigungsteil und einem Gelenkteil. Das Befestigungsteil ist drehfest mit der Wischerwelle verbunden und weist eine Gelenkachse auf, an der das Gelenkteil angelenkt ist. An dem der Achse gegenüberliegenden Ende des Gelenkteils ist in der Regel ein Wischblatt ebenfalls gelenkig befestigt. Zwischen dem Befestigungsteil und dem Gelenkteil ist eine Feder angeordnet, die zum einen den für ein ordnungsgemäßes Wischen notwendigen Anpressdruck auf das Wischblatt erzeugt und zum anderen in einer sogenannten Abklappstellung, die für einen Wischblattwechsel notwendig ist, das Gelenkteil in eine stabile Lage drängt. Bei diesen Ausführungen ist nachteilig, daß zwischen dem Befestigungsteil und dem Gelenkteil ein unvermeidbarer Spalt verbleibt, der zum einen verschmutzen kann und Windgeräusche verursacht und zum anderen dem optischen Eindruck abträglich ist.

Mit der EP-A-0 770 526 ist ein Wischerarm bekannt geworden, dessen Gelenkteil das Befestigungsteil übergreift und auf der - bezogen auf die Aufnahme der Wischerwelle am Befestigungsteil - der Wischblattaufnahme gegenüberliegenden Seite angelenkt ist. Um der Aufgabe der Feder - Erzeugung des Anpressdruckes zum einen und gewährleisten einer stabilen Abklappstellung zum anderen - Rechnung zu tragen, ist ein Zwischenteil vorgesehen, das im Bereich der von den herkömmlichen Wischarmen bekannten Gelenkposition angelenkt ist und mit dem die Feder zusammenwirkt. Dieses Zwischenstück übermittelt den durch die Feder erzeugten Anpressdruck auf das Gelenkteil des Wischarms über eine zusätzliche Achse und drängt das Gelenkteil in der Abklappstellung in die stabile Position. Dieser Aufbau vermeidet zwar einen Spalt zwischen Befestigungs- und Gelenkteil, ist jedoch aufwendig im Aufbau und bedingt einen erhöhten Platzbedarf.

Weiterhin ist aus der GB-A-958555 ein Scheibenwischerarm für Scheibenwischer bekannt, der alle im Oberbegriff des Anspruchs 1 enthaltenen Merkmale zeigt.

### Vorteile der Erfindung

Der erfindungsgemäße Scheibenwischerarm mit den Merkmalen des Hauptanspruchs hat den Vorteil eines sehr einfachen Aufbaus mit wie bei den herkömmlichen Wischerarmen einem Gelenk und einem Befestigungsteil und einer zwischen diesen Teilen wirkenden Feder. Dennoch kann aufgrund der besonderen Anordnung der Gelenkachse und der Angriffspunkte der Feder ein spaltloser Aufbau erreicht werden. Außerdem ist eine platzsparende, gedrängte Integration des Befestigungteils und der Feder innerhalb des Gelenkteils des Wischarms möglich.

Durch die in den Unteransprüchen aufgeführten Merkmale sind vorteilhafte Weiterbildungen des Scheibenwischerarms nach dem Hauptanspruch möglich. Einen noch gedrängteren Aufbau ermöglicht die Anordnung des Angriffpunktes der Feder am Gelenkteil auf der Seite der Gelenkachse, da dieser sehr nahe um die Gelenkachse schwenken kann. Dadurch werden die beiden jeweils unter Federbelastung stehenden Endpositionen - auf- bzw. abgeklappt - einfach erreichbar.

Ein weiterer Platzgewinn ergibt sich, wenn der Angriffspunkt der Feder am Gelenkteil oberhalb der Gelenkachse liegt und vorteilhafterweise der Angriffspunkt der Feder am Befestigungsteil unterhalb der Gelenkachse liegt. Dadurch gelangt die Feder in einen Bereich, in dem genügend Platz vorhanden ist, ohne das das Gelenkteil hierfür ausgebaucht werden müßte.

Durch die vorteilhafte Ausbildung einer Anschlagsschulter und einer Gegenschulter am Gelenkteil bzw. Befestigungsteil kann eine genaue Abklapp-Position erreicht werden, ohne daß hierfür zusätzliche Teile einzusetzen sind.

Durch am Befestigungsteil angeformte Führungsmittel kann die Pendelbewegung im Wischbetrieb exakt auf das sich längs erstreckende Gelenkteil übertragen werden. Dadurch wird die für die Abklappbewegung notwendige Achse von der Übertragung des Drehmoments für die Pendelbewegung entlastet.

Von besonderem Vorteil ist, daß eine Zugfeder eingesetzt werden kann, die sehr einfach herstellbar ist und ohne Stützmittel - wie beispielsweise für Druckfedern - auskommt. Um dem Platzangebot Rechnung zu tragen kann, die Feder vorteilhaft zwei oder mehrteilig sein und insbesondere eine Zugfeder und eine Bügelfeder umfassen. Die Bügelfeder ist im einfachsten Fall ein Drahtteil, daß die Aufnahme der Wischerwelle eng umgreift.

### Zeichnung

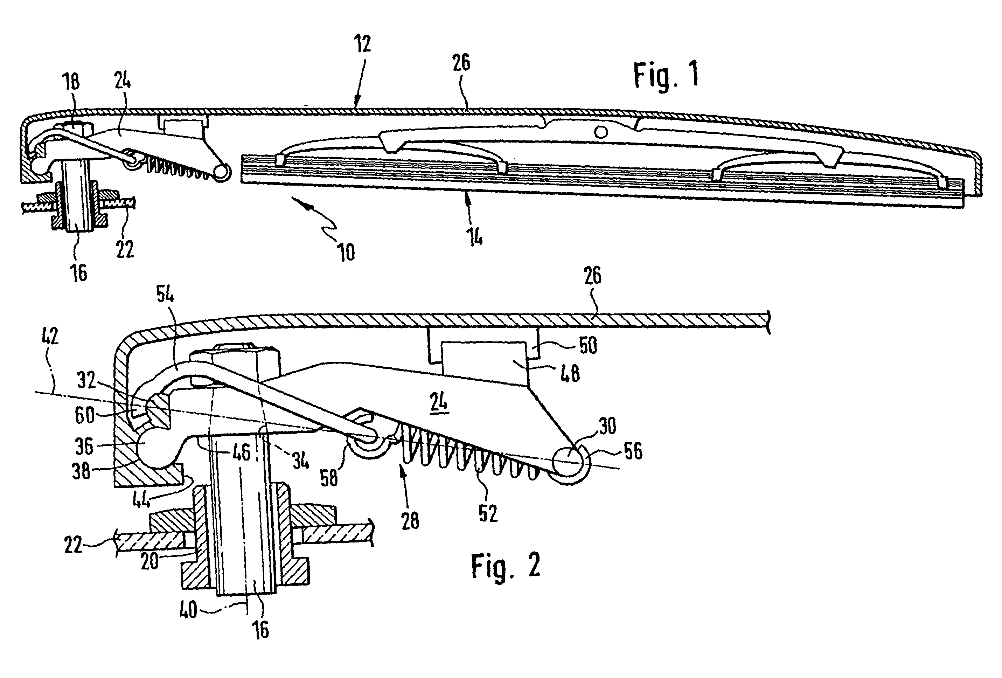

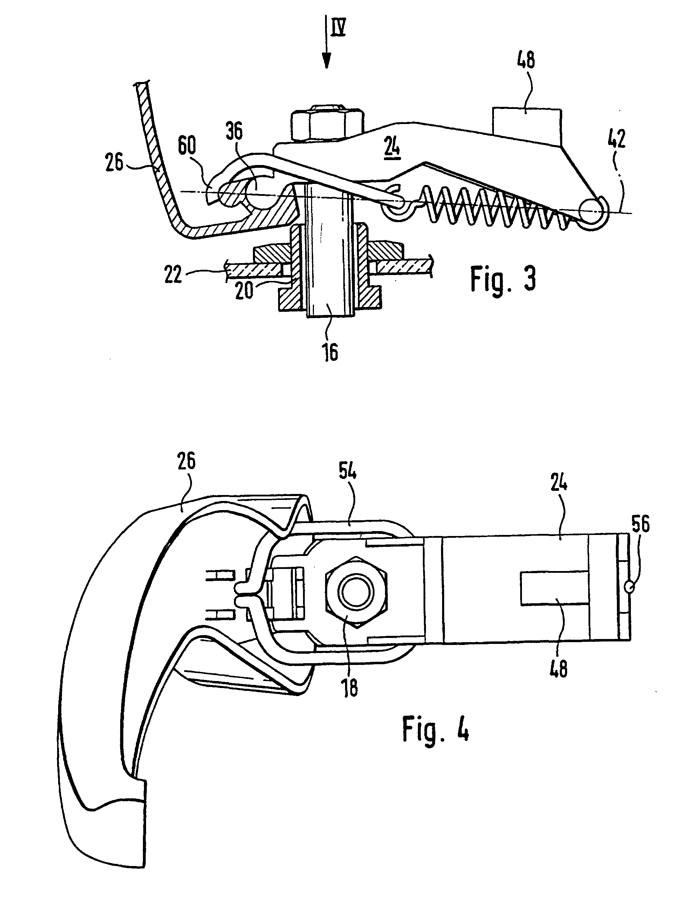

In der Zeichnung ist ein Ausführungsbeispiel des erfindungsgemäßen Scheibenwischerarms dargestellt und in der nachfolgenden Beschreibung unter Angabe weiterer Vorteile näher erläutert. Es zeigen Figur 1 einen erfindungsgemäßen Scheibenwischerarm mit einem Wischblatt, Figur 2 den Gelenkbereich des Scheibenwischerarms nach Figur 1 in einer vergrößerten Darstellung, Figur 3 den Gelenkbereich nach Figur 2 in Abklappstellung verkleinert dargestellt und Figur 4 eine Ansicht nach IV in Figur 3.

### Beschreibung

In Figur 1 ist ein Scheibenwischer 10 mit einem Scheibenwischerarm 12 und einem Wischblatt 14 dargestellt. Der Scheibenwischerarm 12 (im folgenden kurz Wischerarm genannt) ist drehfest mit einer Wischerwelle 16 verbunden und mit einer Mutter 18 fixiert. Die Wischerwelle 16 ist von einem wischerlager 20 umfaßt, das im Fall des Ausführungsbeispiels durch eine Heckscheibe 22 geführt ist. Wie in Figur 1 dargestellt, besteht der Wischerarm 12 aus einem Befestigungsteil 24 und einem Gelenkteil 26, das das Scheibenwischerblatt einerseits und die Wischerwelle andererseits übergreift.

Zwischen dem Befestigungsteil 24 und dem Gelenkteil 26 ist eine Feder 28 angeordnet, die ihren einen Angriffspunkt 30 am Befestigungsteil 24 und ihren anderen Angriffspunkt 32 am Gelenkteil 26 hat. Bezogen auf die Aufnahme 34 des Befestigungsteils 24 für die Wischerwelle 16 befinden sich die beiden Angriffspunkte 30 und 32 auf einander gegenüberliegenden Seiten. An das Befestigungsteil 24, das mit der Aufnahme 34 die Wischerwelle 16 umgreift, ist eine Gelenkachse 36 angeformt, die von einer zylinderförmigen Lagerschale 38, die am Gelenkteil 26 angeformt ist, umgriffen wird. Der Angriffspunkt 32 ist, bezogen auf die Achse 40 der Wischerwelle 16 axial oberhalb der Gelenkachse 36 angeordnet.

Das Befestigungsteil 24 erstreckt sich unterhalb des Gelenkteils 26 ausgehend von der Aufnahme 34 in Richtung auf das Wischblatt 14 und bildet mit seinem äußeren Ende den Angriffspunkt 30 für die Feder 28. Dieser Angriffspunkt 30 liegt bezogen auf die Achse 40 axial unterhalb der Gelenkachse 36.

Beim Abklappen des Wischerarms 12 von der zu wischenden Scheibe bewegt sich der Angriffspunkt 32 um die Gelenkachse 36 von axial oberhalb der Gelenkachse in Richtung gleicher Höhe bis axial unterhalb der Gelenkachse 36 jeweils gesehen in Richtung der Achse 40. Dadurch verschiebt sich die Wirkungslinie 42 ebenfalls von axial oberhalb der Gelenkachse 36 nach axial unterhalb, so daß das Gelenkteil 26 in die Abklappstellung durch die Feder 28 gezogen wird (siehe Figuren 2 und 3).

Die genaue Position der Abklappstellung wird durch eine am Gelenkteil 26 angeformte Anschlagschulter 44, die in der Abklappstellung mit einer am Befestigungsteil 24 angeformten Gegenschulter 46 zusammenwirkt, begrenzt.

Am Befestigungsteil 24 sind in der Nähe des Angriffspunktes 30 Führungsmittel in Form eines auskragenden Nockens 48 angebracht, die in Wischstellung von einer am Gelenkteil 26 angeformten Führungsaufnahme 50 umgriffen wird. Bei der Übertragung der Pendelbewegung ausgehend von der Wischerwelle 16 über das Befestigungsteil 24 wird so das Drehmoment sowohl über die Gelenktachse 16 als auch über den Nocken 48 auf die Führungsaufnahme 50 und damit auf das Gelenkteil 26 übertragen. Die für die Abklappbewegung vorgesehene Gelenkachse 36 ist auf diese Weise von der Übertragung des Drehmoments größtenteils entlastet.

Im Ausführungsbeispiel ist die Feder 28 mehrteilig - hier zweiteilig - ausgeführt und umfaßt eine spiralförmige Zugfeder 52, sowie eine aus gebogenem Draht geformte Bügelfeder 54. Die Zugfeder 52 ist dabei mit einem Haken 56 am Angriffspunkt 30 einerseits und in einem weiteren Haken 58 an der Bügelfeder 54 eingehängt. Auf der dem Haken 58 gegenüberliegenden Seite umgreift die Bügelfeder 54 mit einem hakenförmigen Fortsatz 60 den Angriffspunkt 32. In der Figur 4 ist dargestellt, wie die Bügelfeder 54 um den Bereich der Aufnahme 34 herum gebogen und zum Angriffspunkt 32 geführt ist.

Es sind auch andere Ausführungsformen der Feder 28 vorstellbar. So kann die Bügelfeder 54 beispielsweise direkt einstückig an die Zugfeder 52 angeformt sein oder bei entsprechender Wahl der Angriffspunkte können Bügelfeder 54 und Zugfeder 52 auch gegeneinander ausgetauscht sein.

## Patentansprüche

1. Scheibenwischerarm für Scheibenwischer von Kraftfahrzeugen mit einem mit einer Wischerwelle (16) verbindbaren Befestigungsteil (24), an das ein mit einem Wischblatt (14) verbindbaren Gelenkteil (26) von einer Feder (28) belastet über eine Gelenkachse (36) belastet angelenkt ist, die bezogen auf eine Aufnahme (34) für die Wischerwelle (16) auf der dem Verbindungspunkt des Gelenkteils (26) zum Wischblatt (14) gegenüberliegenden Seite liegt, wobei die Angriffspunkte (30, 32) der Feder (28) zwischen Gelenkteil (26) und Befestigungsteil (24) bezogen auf die Aufnahme (34) der Wischerwelle (16) auf gegenüberliegenden Seiten liegen und der Angriffspunkt (32) der Feder (28) am Gelenkteil (26) bezogen auf die Achse (40) der aufzunehmenden Wischerwelle (16) axial oberhalb der Gelenkachse (36) liegt **dadurch gekennzeichnet, daß** der Angriffspunkt (32) der Feder (28) am Gelenkteil (26) bei einer Abklappbewegung des Scheibenwischerarms (12) von axial oberhalb nach axial unterhalb der Gelenkachse (36) bewegbar ist.

2. Scheibenwischerarm nach Anspruch 1, **dadurch gekennzeichnet, daß** der Angriffspunkt (32) der Feder (28) am Gelenkteil (26) auf der Seite der Gelenkachse (36) liegt.

3. Scheibenwischerarm nach einem der vorhergehenden Ansprüche, **dadurch gekennzeichnet, daß** der Angriffspunkt (30) der Feder (28) am Befestigungsteil (24) bezogen auf die Achse (40) der aufzunehmenden Wischerwelle (16) axial unterhalb der Gelenkachse (34) liegt.

4. Scheibenwischerarm nach einem der vorhergehenden Ansprüche, **dadurch gekennzeichnet, daß** bezogen auf die Gelenkachse (36) auf der dem Angriffspunkt (32) der Feder (28) am Gelenkteil (26) gegenüberliegenden Seite am Gelenkteil (26) eine Anschlagschulter (44) ausgebildet ist, die in einer Abklappstellung des Scheibenwischerarms (12) an einer am Befestigungsteil (24) ausgebildeten Gegenschulter (46) anliegt.

5. Scheibenwischerarm nach einem der vorhergehenden Ansprüche, **dadurch gekennzeichnet, daß** am Befestigungsteil (24) Führungsmittel (48) für das Gelenkteil (26) angeordnet sind.

6. Scheibenwischerarm nach Anspruch 5, **dadurch gekennzeichnet, daß** die Führungsmittel (48) bezogen auf die Aufnahme (34) für die Wischerwelle (16) auf der Seite des Angriffspunktes (30) der Feder (28) am Befestigungsteil (24) angeordnet sind.

7. Scheibenwischerarm nach einem der vorhergehenden Ansprüche, **dadurch gekennzeichnet, daß** die Feder (28) eine Zugfeder (52) ist.

8. Scheibenwischerarm nach einem der vorhergehenden Ansprüche, **dadurch gekennzeichnet, daß** die Feder (28) mindestens zweiteilig ist.

9. Scheibenwischerarm nach einem der vorhergehenden Ansprüche, **dadurch gekennzeichnet, daß** die Feder mindestens eine Zugfeder (52) und eine Bügelfeder (54) umfaßt.

10. Scheibenwischerarm nach Anspruch 9, **dadurch gekennzeichnet, daß** die Bügelfeder (54) die Aufnahme (34) für die Wischerwelle (16) umgreift.

## Claims

1. Window wiper arm for window wipers of motor vehicles, having a fastening part (24) which can be connected to a wiper shaft (16) and to which an articulated part (26), which can be connected to a wiper blade (14), is coupled loaded by a spring (28) via an articulated spindle (36) which, in relation to a mount (34) for the wiper shaft (16), is situated on the side lying opposite the connecting point of the articulated part (26) to the wiper blade (14), the points of application (30, 32) of the spring (28) between the articulated part (26) and fastening part (24) lying on opposite sides in relation to the mount (34) of the wiper shaft (16), and the point of application (32) of the spring (28) on the articulated part (26) lying axially above the articulated spindle (36) in relation to the axis (40) of the wiper shaft (16) to be mounted, **characterized in that** the point of application (32) of the spring (28) on the articulated part (26) can be moved from axially above to axially below the articulated spindle (36) during a swinging-down movement of the window wiper arm (12).

2. Window wiper arm according to Claim 1, **characterized in that** the point of application (32) of the spring (28) on the articulated part (26) lies on the side of the articulated spindle (36).

3. Window wiper arm according to one of the preceding claims, **characterized in that** the point of application (30) of the spring (28) on the fastening part (24) lies axially below the articulated spindle (34) in relation to the axis (40) of the wiper shaft (16) to be mounted.

4. Window wiper arm according to one of the preceding claims, **characterized in that** a stop shoulder (44) is formed on the articulated part (26), on the side lying opposite the point of application (32) of the spring (28) on the articulated part (26) in relation to the articulated spindle (36), the said stop shoulder bearing, in a swung-down position of the window wiper arm (12), against a mating shoulder (46) formed on the fastening part (24).

5. Window wiper arm according to one of the preceding claims, **characterized in that** guide means (48) of the articulated part (26) are arranged on the fastening part (24).

6. Window wiper arm according to Claim 5, **characterized in that** the guide means (48) are arranged, in relation to the mount (34) for the wiper shaft (16), on the side of the point of application (30) of the spring (28) on the fastening part (24).

7. Window wiper arm according to one of the preceding claims, **characterized in that** the spring (28) is a tension spring (52).

8. Window wiper arm according to one of the preceding claims, **characterized in that** the spring (28) is at least in two parts.

9. Window wiper arm according to one of the preceding claims, **characterized in that** the spring comprises at least one tension spring (52) and a clip-type spring (54).

10. Window wiper arm according to Claim 9, **characterized in that** the clip-type spring (54) engages around the mount (34) for the wiper shaft (16).

## Revendications

1. Bras de monture d'essuie-glace pour essuie-glace de véhicules, avec un élément de fixation (24) reliable avec un arbre d'essuie-glace (16), élément sur lequel un élément d'articulation (26) reliable avec un balai d'essuie-glace (14) est articulé en étant sollicité par un ressort (28), au moyen d'un axe d'articulation (36) qui est situé, par rapport à un logement (34) pour l'arbre d'essuie-glace (16), sur le côté situé en face du point de liaison de l'élément d'articulation (26) sur le balai d'essuie-glace (14), dans lequel les points d'attaque (30, 32) du ressort (28) sont situés entre l'élément d'articulation (26) et l'élément de fixation (24), sur le côté situé en face par rapport au logement (34) de l'arbre d'essuie-glace (16), et le point d'attaque (32) du ressort (28) est situé sur l'élément d'articulation (26) axialement au-dessus de l'axe d'articulation (36) par rapport à l'axe (40) de l'arbre d'essuie-glace (16) à recevoir,
**caractérisé en ce que**
le point d'attaque (32) du ressort (28) est mobile sur l'élément d'articulation (26), lors d'un mouvement de rabattement du bras de monture d'essuie-glace (12), d'axialement au-dessus vers axialement en dessous de l'axe d'articulation (36).

2. Bras de monture d'essuie-glace selon la revendication 1,
**caractérisé en ce que**
le point d'attaque (32) du ressort (28) est situé sur l'élément d'articulation (26) du côté de l'axe d'articulation (36).

3. Bras de monture d'essuie-glace selon l'une des revendications précédentes,
**caractérisé en ce que**
le point d'attaque (30) du ressort (28) est situé sur l'élément de fixation (24) axialement en dessous de l'axe d'articulation (34) par rapport à l'axe (40) de l'arbre d'essuie-glace (16) à recevoir.

4. Bras de monture d'essuie-glace selon l'une des revendications précédentes,
**caractérisé en ce que**
par rapport à l'axe d'articulation (36), sur le côté situé en face du point d'attaque (32) du ressort (28) sur l'élément d'articulation (26), il est prévu sur l'élément d'articulation (26) un épaulement de butée (44) qui, dans une position rabattue du bras de monture d'essuie-glace (12), s'appuie contre un contre-épaulement (46) formé sur l'élément de fixation (24).

5. Bras de monture d'essuie-glace selon l'une des revendications précédentes,
**caractérisé en ce que**
des moyens de guidage (48) de l'élément d'articulation (26) sont disposés sur l'élément de fixation (24).

6. Bras de monture d'essuie-glace selon la revendication 5,
**caractérisé en ce que**
les moyens de guidage (48), par rapport au logement (34) de l'arbre d'essuie-glace (16), sont disposés sur l'élément de fixation (24) du côté du point d'attaque (30) du ressort (28).

7. Bras de monture d'essuie-glace selon l'une des revendications précédentes,
**caractérisé en ce que**
le ressort (28) est un ressort de traction (52).

8. Bras de monture d'essuie-glace selon l'une des revendications précédentes,
**caractérisé en ce que**
le ressort (28) est au moins en deux pièces.

9. Bras de monture d'essuie-glace selon l'une des revendications précédentes,
**caractérisé en ce que**
le ressort comprend au moins un ressort de traction (52) et un ressort en étrier (54).

10. Bras de monture d'essuie-glace selon la revendication 9,
**caractérisé en ce que**
le ressort en étrier (54) entoure le logement (34) de l'arbre d'essuie-glace (16).
